# EUROPEAN PATENT APPLICATION

(11) **EP 2 236 842 A1**
(43) Date of publication of application: **06.10.2010**
(21) Application number: 10158412.6
(22) Date of filing: 30.03.2010
(51) Int. Cl.: F16B 7/04, F16B 7/22

(54) **Coupling device and method to assemble the same**

(30) Priority: 30.03.2009 SE 0950200
(71) Applicant: Ahlberg, Christian, 191 39 Sollentuna (SE)
(72) Inventor: Ahlberg, Christian, 191 39 Sollentuna (SE)
(74) Representative: Lettström, Richard Wilhelm

(57) **Abstract**

The present invention is related to a coupling device (1,100) for connection to at least one object (4,104), preferably at least one tube. The coupling device comprises a male connector means (2,102) which has at least one locking member (9,109,110) movable between a released position and a locking position, and at least one female portion (3,103) having a recess (3b) with a cross section corresponding to the cross section of said male connector means. The coupling device has furthermore connecting means (3a,123) which are adapted to be engaged with said at least one locking member, whereby said coupling device is connected to said at least one object by engaging said at least one locking member with said connecting means when said female portion is fixed to said object. The invention is also related to a method to assemble such a coupling device.

## Description

### Technical field

The present invention is related to a coupling device for an exhibition stand according to the pre-characterizing portion of claim 1 and to a method to manufacture such a coupling device according to the pre-characterizing portion of claim 9.

### Background of the invention

Such a coupling device for connecting two tubes to each other is known by US-B-6,626,605 disclosing a male member and two female members which are assembled by urging sections of the female member against the inner wall of the tubes. Such a coupling device is slow to handle as the parts must be tightened together by screwing the male member into the female members. Normally other couplings such as couplings to assemble tubes or other objects of the exhibition stand are bulky and are not easy to handle. US-A-6,273,633 discloses a tube coupling device holding tube ends together. Such a tube coupling device is usually used at exhibitions to build up a stand. To assemble the tubes a separate tool is needed to tighten the different parts of the coupling device to each other. FR-A-1.278.327 discloses a tube coupling device wherein two tubes are connected to each other end to end. By this device it could be difficult to align the two tubes in predetermined positions in relation to each other. The fact is that in certain cases the tubes can have a special form, as an arcuate form, and it is then desirable to align one tube in an exact position in respect to the other to form a construction which is adapted for a special stand. Moreover, even this device need a separate tool to assemble the tubes to each other. There are stands which require that tubes of different configurations are connected end to end. There are also coupling devices between tube elements or the like which uses a pin and spring connection, wherein the pin snaps in a bored hole in the tube. By such a coupling device the pin in most cases projects outside the outer surface of the tube and it is often a substantial manual pressure is involved to release and sometimes even to connect a tube to such a coupling device.

### Object of the invention

The object of the invention is to provide a coupling device which overcomes the drawbacks of the known coupling devices and which is reliable as to its function and has a simple design.

Another object of the invention is to provide a method to manufacture such a coupling device which is easy to handle.

### Summary of the invention

The above objects are achieved by means of a coupling device having the features of the characterizing portion of claim 1 and a method to manufacture such a coupling device according to the characterizing portion of claim 9.

The sub claims define preferred embodiments of the invention.

The coupling device according to the invention can be used to assemble tubes or other different objects to each other at distinct predetermined positions in relation to each other in an easy way without using a tool. The user can assemble the objects by just introducing manually the male connector element into each female connector portion so that the locking member of the male connector element comes to engagement with the connecting means of the female portion in question. The coupling device according to the invention also makes it possible to connect tubes or other objects to each other where the outer surface of the tube/object is flush with the outer surface of the coupling device.

Another advantage with the coupling device according to the invention is that it is possible to change angle position between the two objects without using a tool and even without disassembling the coupling device. The locking member or members can be released in the assembled position and then at least one of the objects can be rotated to a new angular position, whereafter the locking member is activated by means of the button member to lock the coupling device in the new position.

### Brief description of the drawings

The invention will be described in closer detail in the following by way of preferred embodiments thereof with reference to the annexed drawings.
Fig. 1 is a partial side view of a first embodiment of a coupling device for an exhibition stand according to the invention placed within two prefabricated tubes to be connected substantially end to end.
Fig. 2 is a cross-sectional view of along the line II - II in fig. 1 of the coupling device according to the invention.
Fig. 3 is view like fig. 2 but in perspective showing a locked position of the coupling device according to the invention.
Fig. 4 is a view like fig. 3, but in a released position.
Fig. 5 is a perspective view of an insert of the coupling device according to the invention.
Fig. 6 is a perspective view of a prefabricated tube portion constituting a part of the coupling device according to the invention.
Fig. 7 is an exploded view of the first embodiment of the coupling device according to the invention.
Fig. 8 is view like fig. 2 showing a second embodiment of the coupling device according to the invention in a locked position.

### Description of preferred embodiments

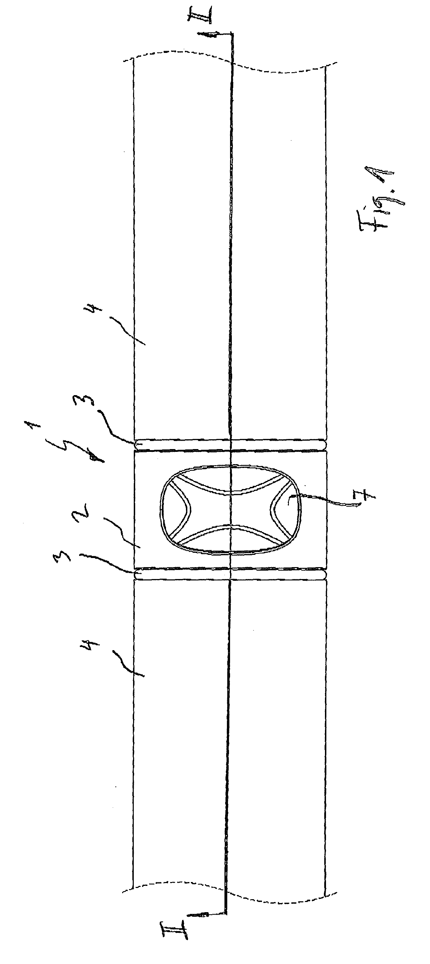

In figs. 1 - 7 a preferred embodiment of a first embodiment of a coupling device 1 according to the invention is shown. The coupling device 1 comprises a male connector element 2, two female connector plugs 3 and two objects to be connected to each other, such as tubes 4 of a solid and preferably extrudable material, such as aluminium.

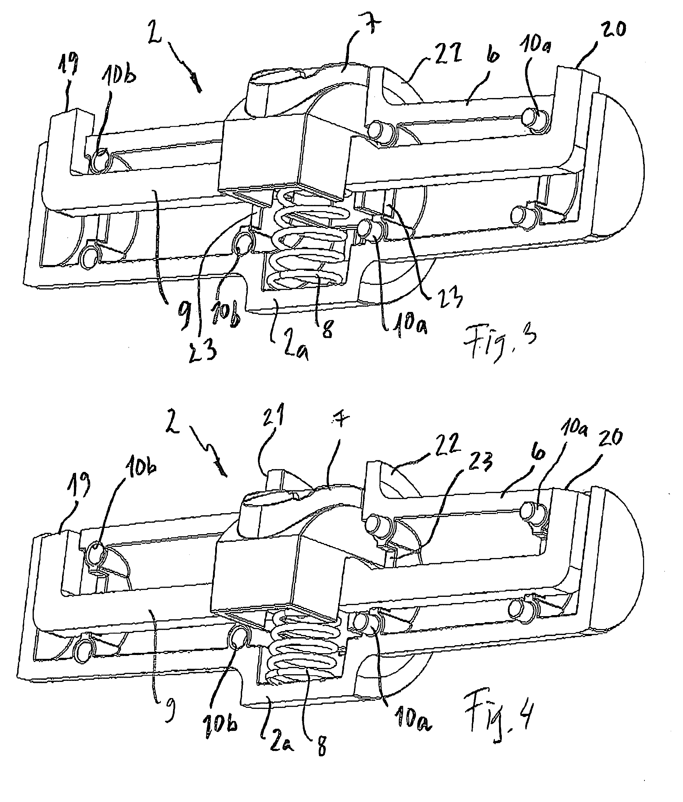

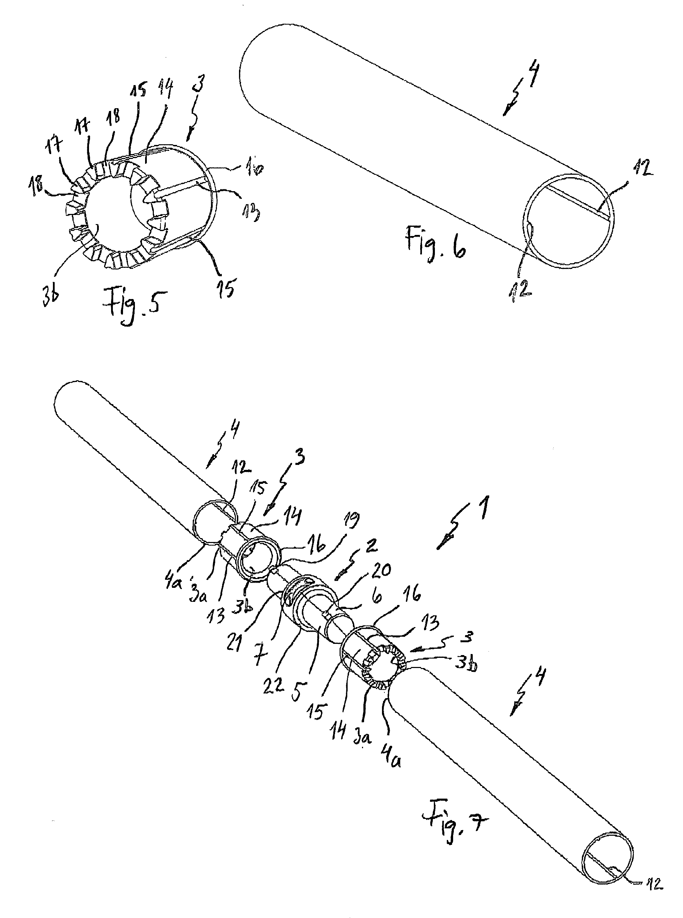

The male connector element 2 consists of two plastic body halves 5 and 6 (see especially fig. 7), preferably made of a plastic material, a button member 7 which is also preferably made by a plastic material, a helical spring 8, preferably made of metal and placed between the button member 7 and an assembled base portion 2a composed by portions of both body halves 5 and 6, and a locking member 9 which is preferably made by plastic. The body half 6 (see figs. 3 and 4) has four pins 10a on one side thereof and four holes 10b on the other side thereof. The other body half 5 is identic and is provided with (not shown) corresponding holes and pins, respectively, so that the body halves 5 and 6 can be properly aligned together. The body halves 5 and 6 are thereafter fixed together. preferably welded together by ultrasound welding The locking member 9 is held in a locked position, as can be seen in fig. 3, by the spring pressure of the helical spring 8 and can be pushed to the released position (see especially fig. 4) by pushing the button member 7 towards the centre axis of the male connector element 2.

The female connector plugs 3 are placed into each end 4a of the tube elements 4 and fixed thereto either aligned by means of longitudinal opposed ribs 12 along the inside of the tubes 4 and corresponding longitudinal aligning grooves 13 on the outer surface 14 of the female connector plugs 3. Each female connector plugs 3 has beside the grooves 13 four further receiving grooves 15, whereby all six grooves are distributed substantially uniformly around the outer surface 14 of each plug 3. As mentioned above, two opposite aligning grooves 13 are used for the alignment of each female connector plug 3 into the tube ends 4a in question and the other additional four receiving grooves 15 are used to receive overflow of glue when the female connector plug 3 is fixed by gluing into the tube end 4a.

Each female connector plugs 3 has a cylindrical form and has at one end a radially outwardly projecting flange 16 which is intended to abut against the tube end 4a when the female connector plugs 3 is put into place into the tube 4. At the other end of the female connector plugs 3 a saw-tooth shaped ridge 3a is formed with alternating axial projections 17 which are preferably quadrangular in section, and in between said projections spaces 18 with a preferably quadrangular base. The female connector plugs 3 has an inner hole 3b which is substantially round in cross section, the diameters at the ends of the inner hole 3b being slightly less than the diameter of the ends of the male connector element 2. The inner hole 3b and the outer surface of the male connector element 2 can be conical so that the cross sectional area of the end of the inner hole facing the male connector element 2 is greater than the cross sectional area of the end of the inner hole facing away from the male connector element.

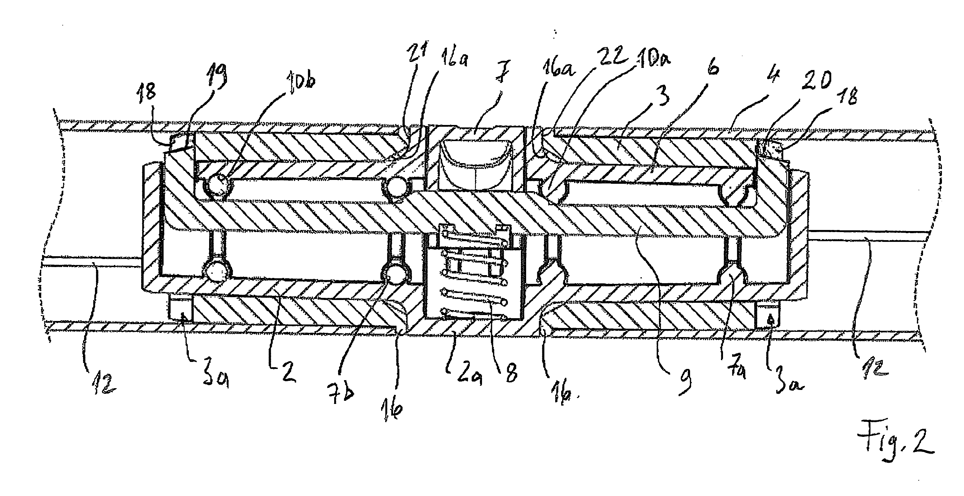

The diameter of the female connector plugs 3 is slightly conical and is decreasing towards the ridge 3a. Furthermore, the diameter at the flange 16 is substantially the same as the outer diameter of the tube 4, so that, when mounting the connector plugs 3 into each tube end 4a, in the preferred embodiment, the outer surface 14 of each connector plug 3 is coated by glue or any other binding agent and is thereafter forced into the tube end 4a. The overflow of glue is then absorbed into the receiving grooves 15. In one case, there are six identical grooves in each female connector plug 3 and only two ribs 12 inside the profile, the parts can be assembled in three different angles with the same result. This facilitates the assembly of the female connector plug 3 into the tubes 4. As can be seen in figs. 2 and 7 the ribs 12 on each tube 4 are not aligned in relation to each other, but are here introduced in different grooves 13, 15 on the outer surfaces 14 of the female connector plugs 3.

It should be pointed out that the tubes are straight throughout their whole extension, i.e., extruded so that they contains the ribs 12 along their inner surfaces. The tubes can thereafter be bent to any suitable form, e.g., an arcuate form.

When mounting two tubes end-to-end the female connector plugs 3 are first mounted into each tube end 4. Thereafter, the male connector element 2 is introduced in each female connector plugs 3 by, on one hand, introducing and pressing one end of the male connector element 2 into the cylindrical hole in the female connector plugs 3 so that the bevelled end 19 or 20 of the locking member comes into contact with an annular bevelled surface 16a at the insertion end of either one of the female connector plugs 3. The end 19 or 20 of the locking member 9 is then forced towards the centre axis of the male connector element 2 against the force of the helical spring 8 so that the male connector element 2 can be introduced further into the female connector plug 3 until the locking member can yield back to the released position , as in fig. 3, and mesh into a space 18 between two projections 17 of the female connector plug 3. On the other, hand the user instead of pressing the male connector element 2 with force into the female connector plug 3 can push the button member 8 before entering the male connector element 2 into the female connector plug so that the ends 19 and 20 of the locking element 10 are pushed directly towards the centre axis of the male connector element 2 to the released position.. When the radially outwardly projecting flange 16 of each female connector plugs 3 abuts the annular surface 21 and 22, respectively, on the assembled body halves 5, 6 of the male connector element 2, the button member 8 is released so that the ends 19, 20 of the locking members can enter into a space 18 between two projections 17 on the ridge 3a of the female connector plugs 3 faced inwardly of the tube end 4a. The two tubes 4 are then fixed releasably together in predetermined positions. Normally the ridge 3a of each female connector plug 3 consists of twelve spaces 18 provided circumferencely at 30 degrees angular displacement, so that the each tube 4 can be adjusted in 12 different fixed angular positions.

One must take into consideration when mounting the coupling device that it takes up a axial distance between the objects which are to be assembled and that this distance axially is the axial width between the annular surfaces 21 and 22 of the mid portion of the male connector element 2 and the axial width of the two flanges 16 of the female connector plugs 3. If any female connector plug 3 is incorporated in an object which is to be connected by means of the coupling device according to the invention, the annular surface could abut directly against this object.

The movement of the locking member between the released position and the locked position is limited by the opposite surfaces of two rectangular spaces 23 situated on either side of the button member 7 and provided in the assembled body halves 5, 6 of the male connector element 2.

In the drawings it is shown how two tubes arte connected to each other by means of the coupling device according to the invention. However, it is within the scope of the accompanying claims possible to use the coupling device to connect other accessories of an exhibition stand to each other, such as feet, holders or other objects of the kind, and of course to connect such objects to a tube. The main important thing is that the object contains a hole which is so arranged that a female connector plug 3 can be fixed at it, either in a hole as described above or in another known way. The female connector plug 3 could be fixed in the hole in the tube or another object by means of other known fastening means than by gluing. The female connector plug 3 could also be made as an integral part of an object which shall be assembled by means of the coupling device according to the invention.

The female connector plugs 3 are here shown having twelve engageable spaces 18 at the ridge 3a, but this number can of course be amended to a number selected due to the needs. Furthermore, six grooves are shown in the embodiment described above and of course this number could be modified to another number as four or eight etc.

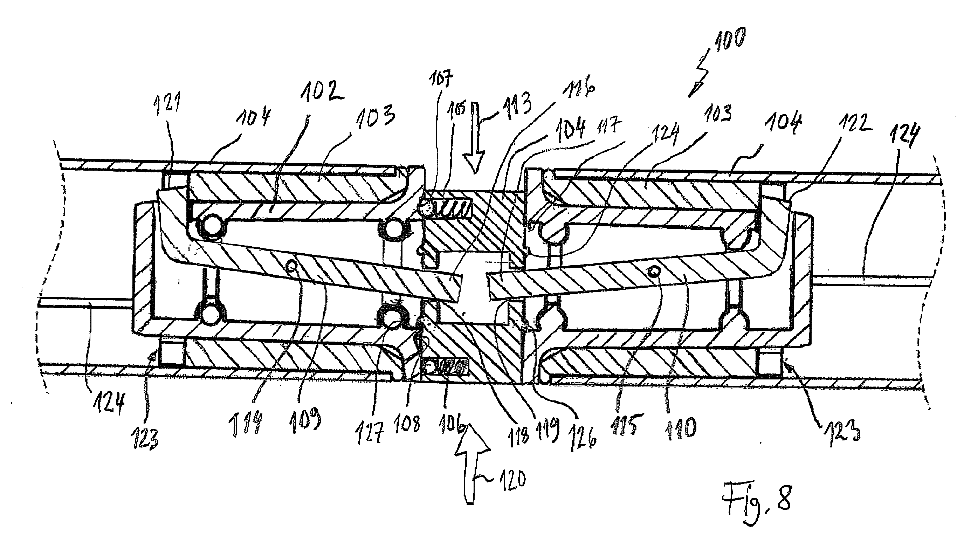

In fig. 8 a second embodiment of a coupling device 100 according to the invention is shown. The main structure of this coupling device 100 is as the coupling device 1 of the first embodiment. The coupling device 100 comprises a male connector element 102 which consists of two assembled halves, preferably made of a plastic material, two female connector plugs 103 and two objects to be connected to each other, such as tubes 104 of a solid and preferably extrudable material, such as aluminium.

The male connector element 102 comprises further a button member 104 which is also preferably made by a plastic material, two snap lockings 105and 106 in the button member 104, preferably of the ball and spring type and each cooperating with a spherical groove107 and 108, respectively, in the wall of the male connector element 102 and situated in the delimitation between the assembled body halves of the male connector element 102, and two locking members 109 and 110 which are preferably made by plastic. The body halves of the connector element 102 have each four pins 111 on one side thereof and four holes 112 on the other side thereof. The other body half (not shown) is provided with corresponding holes and pins, respectively, so that the body halves can be properly aligned together. The body halves are fixed together. preferably welded together by ultrasound welding The locking members 109 and 110 are each rotatably connected to the male connector element 102 by means of pivots 113 and 114, respectively. The locking members 109, 110 are each rotated to the locking position shown in fig. 8 by pressing the button member 104 in the direction of an arrow 115 and are held in the locked position by means of the snap locking 105 which engaged in the hole 107. The inner ends116 and 117 of the locking members 109, 110 are inserted in holes 118 and 119 in the button member 104 and into a chamber within the button member 104.

The button member 104 can be pushed to a released position (not shown) by pressing the button member 104 in the direction of an arrow 120, whereby the inner ends 116 and 117 are forced by the button member 104 so that the other snap locking 106 will come to engagement with the corresponding hole 108. Thereby, the opposite ends 121 and 122 of the locking members 109, 110, respectively, are both released from the engagement in the saw tooth formed ridge 123 of the female connector plugs 103.

The female connector plugs 103 are placed into each end of the tube elements 104 and fixed thereto either aligned by means of longitudinal opposed ribs 124 along the inside of the tubes 104 and corresponding longitudinal aligning grooves (not shown) on the outer surface of the female connector plugs 103. Each female connector plugs 103 has beside the grooves further receiving grooves, whereby all grooves are distributed substantially uniformly around the outer surface of each plug 103. As mentioned above, two opposite aligning grooves are used for the alignment of each female connector plug 103 into ends of the tubes104 in question and the other additional receiving grooves are used to receive overflow of glue when the female connector plug 103 is fixed by gluing into the tube end. First transverse limiting rims 124 are provided on both sides of the button member 104 which come to abutment against shoulders 125 on both sides of the male connector element 102 to restrict the movement of the button member when it is pressed in the direction of the arrow 120. Second transverse limiting rims 126 are provided on both sides of the button member 104 which come to abutment against shoulders 127 on both sides of the male connector element 102 to restrict the movement of the button member when it is pressed in the direction of the arrow 113. The function of the second embodiment of the coupling device 100 according to the invention is in other respects similar to the function of the first embodiment of the coupling device 1 according to the invention.

It should be noted that the tube coupling device according to the invention is not limited to the above described embodiments, but could be modified within the scope of the appended claims.

## Claims

1. A coupling device (1, 100) for connection to at least one object (4, 104), preferably at least one tube, comprising a double ended male connector means (2, 102) which has at least one locking member (9, 109, 110) movable between a released position and a locked position, and at least one female portion (3, 103) having a recess (3b) adapted to receive said male connector means and having connecting means (3a, 123) which are adapted to receive said at least one locking member, **characterized in that** said recess (3b) has an inner cross section substantially corresponding to the outer cross section of said male connector means, and **in that** said at least one locking member (9, 109, 110) being adapted to lock at engaging means (17, 18) of said connecting means (3a, 123), so that said at least one object (4, 104) is locked in at least one predetermined position in relation to the male connector means (2, 102).

2. A coupling device (1, 100) according to claim 1, **characterized in that** said engaging means consists of a ridge, preferably at the end of said female portion (3, 103) facing away from said male connector means (2, 102), with alternating projections (17) and spaces (18) therebetween, and **in that** the end of said at least one locking member (9, 109, 110) is intended to be introduced in one of said spaces to lock said at least one object (104) in a predetermined position.

3. A coupling device (1, 100) according to claim 1 or 2, **characterized in that** ends (19, 20, 121, 122) of said at least one locking member (9, 109, 110) are bevelled and **in that** said at least one female portion (3, 103) has a bevelled inner entering surface (16a), wherein by introducing said connector means (2, 102) into said female portion (3, 103) said at least one locking member is urged towards said released position.

4. A coupling device (1) according to anyone of claims 1 - 3, **characterized in that** said male connector means (2) is double ended and has a through locking member (9), **in that** said male connector means (2) has a mid portion with a button member (7) which is pressed down to release said locking member (9) for connecting the male connector means to said at least one female portion (3) and **in that** said locking member is urged towards the locked position by means of a spring means (8), preferably a helical spring.

5. A coupling device (100) according to anyone of claims 1 - 3, **characterized in that** said male connector means (102) is double ended and has two rotatably mounted locking members (109, 110) and **in that** said male connector means (102) has a mid portion with a button member (104) which is pressed in one direction (113) to a locking position and is pressed in the opposite direction (120) to a released position of the coupling device (100).

6. A coupling device (1) according to anyone of claim 1 - 5, **characterized in that** said at least one female portion (3, 103) each, at one end thereof, is provided with a radially protruding flange (16) which is intended to abut against the hole end of the object (4, 104) to limit the introduction of the insert into the object, said flange having preferably an outer surface which is substantially flush with the outer surface of the object (4, 104).

7. A coupling device (1) according to anyone of claim 1 - 6, **characterized in that** at least one of the objects is a tube (4, 104) and is extruded of a metallic or plastic material with at least one longitudinal rib (12, 124) on the inside surface thereof, said rib being intended to be engaged into a corresponding groove (13,15) in the outer surface of said at least one female portion (3, 103).

8. A coupling device (1) according to anyone of claims 1 - 7, **characterized in that** the outer surface of the mid portion of said double ended male connector means (2, 102) is flush with the outer surface of at least one of said objects (4).

9. A method to assemble a coupling device (1, 100) according to anyone of claims 1 - 8, **characterized in** the steps of connecting at least one female member (3, 103) in at least one opening in at least one object, preferably at least one tube, introduce both ends of a male connector means (2, 102) which is placed in a released position by means of a button member (7, 104) on said male connector means, and move said button member, so that a locking member (9, 109, 110) at said male connector means comes to engagement with connecting means (3a, 123) on said at least one female member (3, 103).

10. A method according to claim 9, **characterized in that** said engaging means consists of a ridge, preferably at the end of said female portion (3, 103) facing away from said male connector means (2, 102), with alternating projections (17) and spaces (18) therebetween, and **in that** said at least one locking member (9, 109, 110) is intended to be introduced in one of said spaces to lock said objects (104) in a predetermined position.

11. A method according to claim 9 or 10, **characterized in that** said at least one female member (3, 103) is fixed in a predetermined position in at least one of said objects, preferably by engage ribs (12, 124) on the inside surface of said objects with corresponding grooves (13, 15) on the outer surfaces of said at least one female member.
